(19)  Europäisches Patentamt

European Patent Office

Office européen des brevets

(11) **EP 3 509 234 A1**

(12) **EUROPEAN PATENT APPLICATION**
published in accordance with Art. 153(4) EPC

(43) Date of publication:
**10.07.2019 Bulletin 2019/28**

(21) Application number: **17847039.9**

(22) Date of filing: **01.09.2017**

(51) Int Cl.:
*H04L 1/00* (2006.01)　　　*H04L 1/18* (2006.01)
*H04W 72/12* (2009.01)

(86) International application number:
**PCT/KR2017/009591**

(87) International publication number:
**WO 2018/044114 (08.03.2018 Gazette 2018/10)**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.09.2016　US 201662382782 P**
　　　　　　**29.09.2016　US 201662401812 P**

(71) Applicant: **LG Electronics Inc.**
**Seoul 07336 (KR)**

(72) Inventors:
 • **HWANG, Seunggye**
**Seoul 06772 (KR)**

</td><td>

 • **YANG, Suckchel**
**Seoul 06772 (KR)**
 • **LEE, Seungmin**
**Seoul 06772 (KR)**
 • **KIM, Kijun**
**Seoul 06772 (KR)**
 • **KIM, Bonghoe**
**Seoul 06772 (KR)**
 • **KIM, Seonwook**
**Seoul 06772 (KR)**
 • **YI, Yunjung**
**Seoul 06772 (KR)**
 • **HWANG, Daesung**
**Seoul 06772 (KR)**

(74) Representative: **Cabinet Plasseraud**
**66, rue de la Chaussée d'Antin**
**75440 Paris Cedex 09 (FR)**

</td></tr>
</table>

(54) **METHOD AND TERMINAL FOR DETERMINING ORDER OF BLIND DECODING FOR MULTIPLE SEARCH SPACES**

(57)　　A disclosure of the present specification provides a method for receiving a control channel in a search space. The method may comprise the steps of: determining an order of multiple search spaces in a blind decoding; and performing the blind decoding in the multiple search spaces according to the determined order. In this regard, the order of the multiple search spaces may be determined on the basis of delay sensitivity.

**FIG. 12**

**Description**

**BACKGROUND OF THE INVENTION**

Field of the invention

The present invention relates to mobile communication.

Related Art

3rd generation partnership project (3GPP) long term evolution (LTE) evolved from a universal mobile telecommunications system (UMTS) is introduced as the 3GPP release 8. The 3GPP LTE uses orthogonal frequency division multiple access (OFDMA) in a downlink, and uses single carrier-frequency division multiple access (SC-FDMA) in an uplink. The 3GPP LTE employs multiple input multiple output (MIMO) having up to four antennas. In recent years, there is an ongoing development on 3GPP LTE-advanced (LTE-A) evolved from the 3GPP LTE.

In LTE/LTE-A, a physical channel may be classified into a physical downlink shared channel (PDSCH) and a physical downlink control channel (PDCCH) as a downlink channel and a physical uplink shared channel (PUSCH) and a physical uplink control channel (PUCCH) as an uplink channel.

In the legacy LTE/LTE-A system, a terminal performs blind decoding on multiple search spaces (SSs) in order to receive control information transmitted from a base station to the terminal through a control channel such as a PDCCH. In general, in the SS, control information suitable for each purpose is transmitted with a DCI format.

However, as such, since blind decoding (BD) for the PDCCH is to be performed in the multiple SSs, there is a problem in that complexity is increased, and a latency is increased. Meanwhile, since a lower latency is required in next-generation mobile communication, the aforementioned problem must be solved.

**SUMMARY OF THE INVENTION**

According to the disclosure of the present invention, the problem of the conventional technology described above may be solved.

In order to achieve the aforementioned purpose, a disclosure of the present specification provides a method of receiving a control channel in a search space. The method may include: determining an order of blind decoding among multiple search spaces; and performing the blind decoding in the multiple search spaces based on the determined order. Herein, the order among the multiple search spaces may be determined based on delay sensitivity.

The delay sensitivity may be for downlink data or uplink data scheduled by the control channel in the search space.

If only a short latency is allowed due to high delay sensitivity regarding downlink data or uplink data scheduled by a control channel within a random search space, the order may be determined to preferentially perform blind decoding on the random search space.

If downlink data or uplink data scheduled by a control channel within a random search space is voice or video call data for which only a low latency is allowed due to high delay sensitivity, the order may be determined to preferentially perform blind decoding on the random search space.

If only a low latency is allowed for an ACK/NACK signal for downlink data scheduled by a control channel within a random search space due to high delay sensitivity, the order may be determined to preferentially perform blind decoding on the random search space.

The multiple search spaces may be divided by locations on a time axis and a frequency axis.

The order may be determined according to a configuration achieved in advance by a base station.

A search space having an earlier order of blind decoding may be located at an earlier symbol location within a subframe or slot.

If delay sensitivity is high such that only a low latency is allowed for DL data or UL data scheduled by a control channel within a random search space, the random search space may be located at an earlier symbol location within a subframe or slot.

In order to achieve the aforementioned purpose, a disclosure of the present specification also provides a terminal for receiving a control channel within a search space. The terminal may include: a transceiver; and a processor for controlling the transceiver. The processor may be configured to: determine an order of blind decoding among multiple search spaces, and perform the blind decoding in the multiple search spaces based on the determined order. The order among the multiple search spaces may be determined based on delay sensitivity.

According to the disclosure of the present invention, the problem of the conventional technology described above may be solved.

## BRIEF DESCRIPTION OF THE DRAWINGS

FIG. 1 is a wireless communication system.
FIG. 2 illustrates a structure of a radio frame according to FDD in 3GPP LTE.
FIG. 3 illustrates the architecture of a downlink sub-frame.
FIG. 4 illustrates an example of resource mapping of a PDCCH.
FIG. 5 illustrates an example of monitoring of a PDCCH.
FIG. 6 shows an example of multiple search spaces monitored by a UE.
FIG. 7 illustrates a heterogeneous network environment in which a macro cell and a small cell co-exist and which is possibly used in a next-generation wireless communication system.
FIG. 8 shows an example of using a licensed band and an unlicensed band with carrier aggregation (CA).
FIG. 9 shows an example of a subframe type in NR.
FIG. 10a to FIG. 10d are examples showing locations of multiple search spaces.
FIG. 11 is an example showing a latency reduction effect according to a first proposal of the present specification.
FIG. 12 shows an example of an ACK/NACK transmission timing according to a second proposal of the present specification.
FIG. 13 shows an example of a UL transmission timing according to a third proposal of the present specification.
FIG. 14 shows another example of a UL transmission timing according to a fourth proposal of the present specification.
FIG. 15 shows another example of a UL transmission timing according to the fourth proposal of the present specification.
FIG. 16 shows an example in which a symbol index for a location of a search space in which a DCI for initial transmission is transmitted is different from a symbol index for a location of a search space in which a DCI for retransmission is transmitted.
FIG. 17 and FIG. 18 show an example of determining a decoding order according to a gap size.
FIG. 19 is a block diagram of a wireless communication system according to an embodiment of the present invention.

## DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the spirit of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the present invention includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present invention, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the spirit of the invention readily understood, but not should be intended to be limiting of the invention. It should be understood that the spirit of the invention may be expanded to its modifications, replacements or equivalents in addition to what is shown in the drawings.

As used herein, 'base station' generally refers to a fixed station that communicates with a wireless device and may be denoted by other terms such as eNB (evolved-NodeB), BTS (base transceiver system), or access point.

As used herein, 'user equipment (UE)' may be stationary or mobile, and may be denoted by other terms such as device, wireless device, terminal, MS (mobile station), UT (user terminal), SS (subscriber station), MT (mobile terminal) and etc.

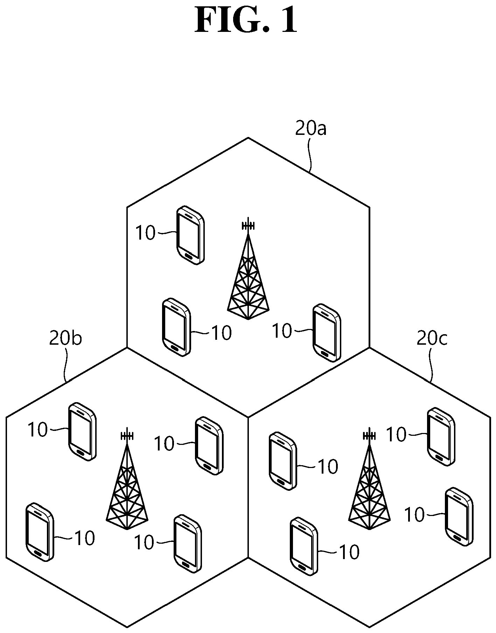

FIG. 1 illustrates a wireless communication system.

As seen with reference to FIG. 1, the wireless communication system includes at least one base station (BS) 20. Each base station 20 provides a communication service to specific geographical areas (generally, referred to as cells) 20a, 20b, and 20c. The cell can be further divided into a plurality of areas (sectors).

The UE generally belongs to one cell and the cell to which the UE belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UEl 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Meanwhile, the wireless communication system may be generally divided into a frequency division duplex (FDD) type and a time division duplex (TDD) type. According to the FDD type, uplink transmission and downlink transmission are achieved while occupying different frequency bands. According to the TDD type, the uplink transmission and the downlink transmission are achieved at different time while occupying the same frequency band. A channel response of the TDD type is substantially reciprocal. This means that a downlink channel response and an uplink channel response are approximately the same as each other in a given frequency area. Accordingly, in the TDD based wireless communication system, the downlink channel response may be acquired from the uplink channel response. In the TDD type, since an entire frequency band is time-divided in the uplink transmission and the downlink transmission, the downlink transmission by the base station and the uplink transmission by the terminal may not be performed simultaneously. In the TDD system in which the uplink transmission and the downlink transmission are divided by the unit of a subframe, the uplink transmission and the downlink transmission are performed in different subframes.

Hereinafter, the LTE system will be described in detail.

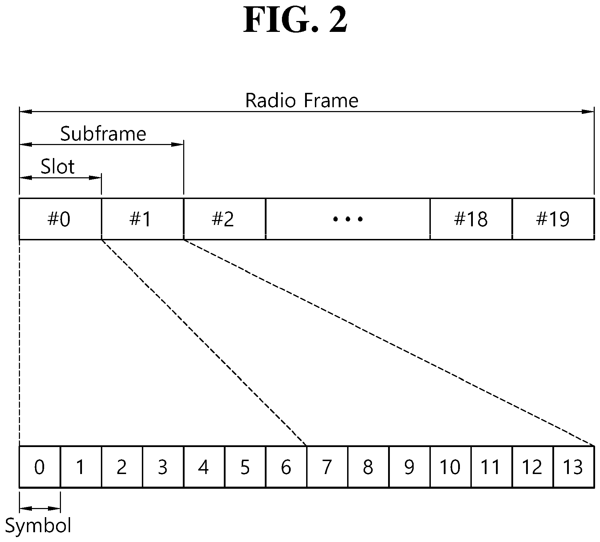

FIG. 2 shows a downlink radio frame structure according to FDD of 3rd generation partnership project (3GPP) long term evolution (LTE).

The radio frame includes 10 sub-frames indexed 0 to 9. One sub-frame includes two consecutive slots. Accordingly, the radio frame includes 20 slots. The time taken for one sub-frame to be transmitted is denoted TTI (transmission time interval). For example, the length of one sub-frame may be 1ms, and the length of one slot may be 0.5ms.

The structure of the radio frame is for exemplary purposes only, and thus the number of sub-frames included in the radio frame or the number of slots included in the sub-frame may change variously.

Meanwhile, one slot may include a plurality of OFDM symbols. The number of OFDM symbols included in one slot may vary depending on a cyclic prefix (CP).

One slot includes $N_{RB}$ resource blocks (RBs) in the frequency domain. For example, in the LTE system, the number of resource blocks (RBs), i.e., $N_{RB}$, may be one from 6 to 110.

The resource block is a unit of resource allocation and includes a plurality of sub-carriers in the frequency domain. For example, if one slot includes seven OFDM symbols in the time domain and the resource block includes 12 sub-carriers in the frequency domain, one resource block may include 7x12 resource elements (REs).

The physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

The uplink channels include a PUSCH, a PUCCH, an SRS (Sounding Reference Signal), and a PRACH (physical random access channel).

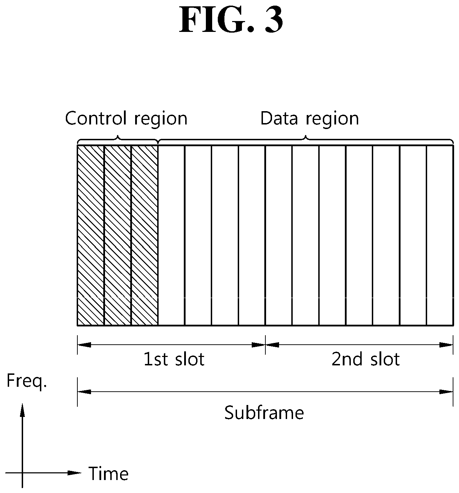

FIG. 3 illustrates the architecture of a downlink sub-frame.

In FIG. 3, assuming the normal CP, one slot includes seven OFDM symbols, by way of example.

The DL (downlink) sub-frame is split into a control region and a data region in the time domain. The control region includes up to first three OFDM symbols in the first slot of the sub-frame. However, the number of OFDM symbols included in the control region may be changed. A PDCCH (physical downlink control channel) and other control channels are allocated to the control region, and a PDSCH is allocated to the data region.

The PCFICH transmitted in the first OFDM symbol of the sub-frame carries CIF (control format indicator) regarding the number (i.e., size of the control region) of OFDM symbols used for transmission of control channels in the sub-frame. The wireless device first receives the CIF on the PCFICH and then monitors the PDCCH.

The control information transmitted through the PDCCH is denoted downlink control information (DCI). The DCI may include resource allocation of PDSCH (this is also referred to as DL (downlink) grant), resource allocation of PUSCH (this is also referred to as UL (uplink) grant), a set of transmission power control commands for individual UEs in some UE group, and/or activation of VoIP (Voice over Internet Protocol).

The base station determines a PDCCH format according to the DCI to be sent to the terminal and adds a CRC (cyclic redundancy check) to control information. The CRC is masked with a unique identifier (RNTI; radio network temporary identifier) depending on the owner or purpose of the PDCCH. In case the PDCCH is for a specific terminal, the terminal's unique identifier, such as C-RNTI (cell-RNTI), may be masked to the CRC. Or, if the PDCCH is for a paging message, a paging indicator, for example, P-RNTI (paging-RNTI) may be masked to the CRC. If the PDCCH is for a system information block (SIB), a system information identifier, SI-RNTI (system information-RNTI), may be masked to the CRC. In order to indicate a random access response that is a response to the terminal's transmission of a random access preamble, an RA-RNTI (random access-RNTI) may be masked to the CRC.

In 3GPP LTE, blind decoding is used for detecting a PDCCH. The blind decoding is a scheme of identifying whether a PDCCH is its own control channel by demasking a desired identifier to the CRC (cyclic redundancy check) of a received PDCCH (this is referred to as candidate PDCCH) and checking a CRC error. The base station determines a PDCCH format according to the DCI to be sent to the wireless device, then adds a CRC to the DCI, and masks a unique identifier (this is referred to as RNTI (radio network temporary identifier) to the CRC depending on the owner or purpose of the PDCCH.

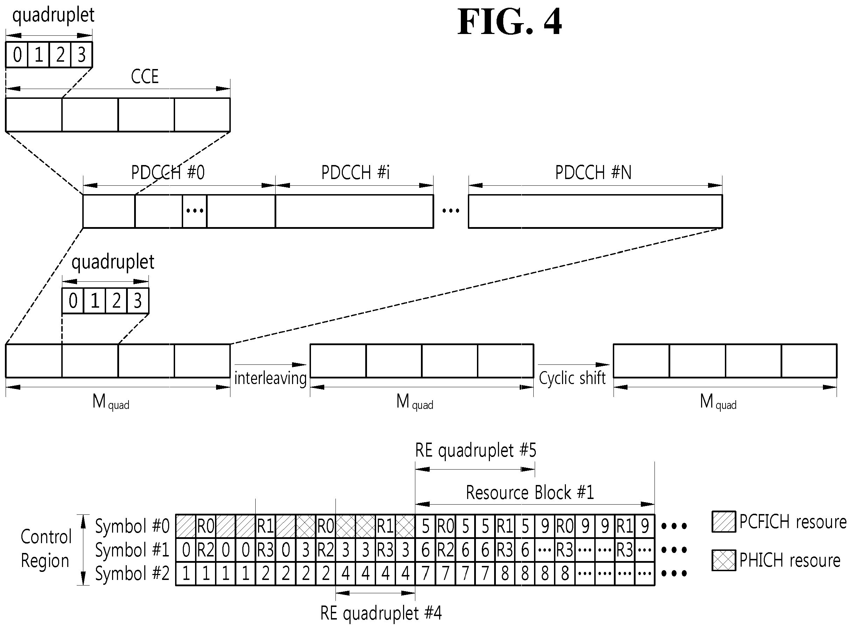

FIG. 4 illustrates an example of resource mapping of a PDCCH.

R0 denotes a reference signal of a 1st antenna, R1 denotes a reference signal of a 2nd antenna, R2 denotes a reference signal of a 3rd antenna, and R3 denotes a reference signal of a 4th antenna.

A control region in a subframe includes a plurality of control channel elements (CCEs). The CCE is a logical allocation unit used to provide the PDCCH with a coding rate depending on a state of a radio channel, and corresponds to a plurality of resource element groups (REGs). The REG includes a plurality of resource elements (REs). According to the relationship between the number of CCEs and the coding rate provided by the CCEs, a PDCCH format and a possible PDCCH bit number are determined.

A BS determines the number of CCEs used in transmission of the PDCCH according to a channel state. For example, a UE having a good DL channel state may use one CCE in PDCCH transmission. A UE having a poor DL channel state may use 8 CCEs in PDCCH transmission.

One REG (indicated by a quadruplet in the drawing) includes 4 REs. One CCE includes 9 REGs. The number of CCEs used to configure one PDCCH may be selected from {1, 2, 4, 8}. Each element of {1, 2, 4, 8} is referred to as a CCE aggregation level.

A control channel consisting of one or more CCEs performs interleaving in unit of REG, and is mapped to a physical resource after performing cyclic shift based on a cell identifier (ID).

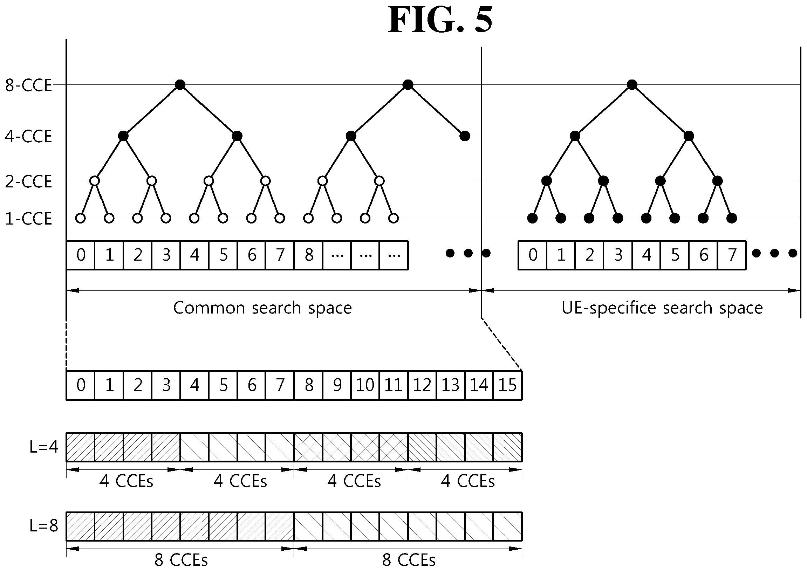

FIG. 5 illustrates an example of monitoring of a PDCCH.

A UE cannot know about a specific position in a control region in which its PDCCH is transmitted and about a specific CCE aggregation or DCI format used for transmission. A plurality of PDCCHs can be transmitted in one subframe, and thus the UE monitors the plurality of PDCCHs in every subframe. Herein, monitoring is an operation of attempting PDCCH decoding by the UE according to a PDCCH format.

The 3GPP LTE uses a search space to reduce an overhead of blind decoding. The search space can also be called a monitoring set of a CCE for the PDCCH. The UE monitors the PDCCH in the search space.

The search space is classified into a common search space and a UE-specific search space. The common search space is a space for searching for a PDCCH having common control information and consists of 16 CCEs indexed with 0 to 15. The common search space supports a PDCCH having a CCE aggregation level of {4, 8}. However, a PDCCH (e.g., DCI formats 0, 1A) for carrying UE-specific information can also be transmitted in the common search space. The UE-specific search space supports a PDCCH having a CCE aggregation level of {1, 2, 4, 8}.

Table 2 below shows the number of PDCCH candidates monitored by a wireless device.

[Table 2]

| Search space $S^{(L)}_k$ | | | Number $M^{(L)}$ of PDCCH candidates |
|---|---|---|---|
| Type | Aggregation level L | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

A size of the search space is determined by Table 2 above, and a start point of the search space is defined differently in the common search space and the UE-specific search space. Although a start point of the common search space is fixed irrespective of a subframe, a start point of the UE-specific search space may vary in every subframe according to a UE identifier (e.g., C-RNTI), a CCE aggregation level, and/or a slot number in a radio frame. If the start point of the UE-specific search space exists in the common search space, the UE-specific search space and the common search space may overlap with each other.

In a CCE aggregation level $L \in \{1,2,3,4\}$, a search space $S^{(L)}_k$ is defined as a set of PDCCH candidates. A CCE corresponding to a PDCCH candidate m of the search space $S^{(L)}_k$ is given by Equation 1 below.

[Equation 1]

$$ L \left\{ (Y_k + m') \bmod \lfloor N_{CCE,k} / L \rfloor \right\} + i $$

Herein, i=0,1,...,L-1, m=0,...,$M^{(L)}$-1, and $N_{CCE,k}$ denotes the total number of CCEs that can be used for PDCCH transmission in a control region of a subframe k. The control region includes a set of CCEs numbered from 0 to $N_{CCE,k}$-1. $M^{(L)}$ denotes the number of PDCCH candidates in a CCE aggregation level L of a given search space.

If a carrier indicator field (CIF) is configured for the wireless device, $m'=m+M^{(L)}n_{cif}$. Herein, $n_{cif}$ is a value of the CIF. If the CIF is not configured for the wireless device, $m'=m$.

In a common search space, $Y_k$ is set to 0 with respect to two aggregation levels L=4 and L=8.

In a UE-specific search space of the aggregation level L, a variable $Y_k$ is defined by Equation 2 below.

[Equation 2]

$$ Y_k = (A \cdot Y_{k-1}) \bmod D $$

Herein, $Y_{-1}=n_{RNTI} \neq 0$, A=39827, D=65537, k=floor($n_s$/2), and $n_s$ denotes a slot number in a radio frame.

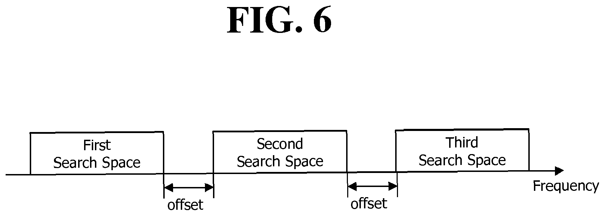

FIG. 6 shows an example of multiple search spaces monitored by a UE.

As can be seen with reference to FIG. 6, the UE may monitor multiple search spaces. The multiple search spaces may be spaced apart from each other by an offset on a frequency axis.

Meanwhile, when the UE monitors the PDCCH by using the C-RNTI, a search space and a DCI format used in monitoring are determined according to a transmission mode (TM) of the PDSCH. The following table shows an example of PDCCH monitoring in which the C-RNTI is set.

[Table 2]

| Transmission mode | DCI format | Search space | Transmission mode of PDSCH according to PDCCH |
|---|---|---|---|
| Transmission mode 1 | DCI format 1A | Public service and terminal specific | Single antenna port, port 0 |

(continued)

| Transmission mode | DCI format | Search space | Transmission mode of PDSCH according to PDCCH |
|---|---|---|---|
| | DCI format 1 | Terminal specific | Single antenna port, port 0 |
| Transmission mode 2 | DCI format 1A | Public service and terminal specific | Transmit diversity |
| | DCI format 1 | Terminal specific | Transmit diversity |
| Transmission mode 3 | DCI format 1A | Public service and terminal specific | Transmit diversity |
| | DCI format 2A | Terminal specific | CDD(Cyclic Delay Diversity) or transmit diversity |
| Transmission mode 4 | DCI format 1A | Public service and terminal specific | Transmit diversity |
| | DCI format 2 | Terminal specific | Closed-loop spatial multiplexing |
| Transmission mode 5 | DCI format 1A | Public service and terminal specific | Transmit diversity |
| | DCI format 1D | Terminal specific | MU-MIMO(Multi-user Multiple Input Multiple Output) |
| Transmission mode 6 | DCI format 1A | Public service and terminal specific | Transmit diversity |
| | DCI format 1B | Terminal specific | Closed-loop spatial multiplexing |
| Transmission mode 7 | DCI format 1A | Public service and terminal specific | If the number of PBCH transmisison ports is 1, single antenna port, port 0. Otherwise, transmit diversity |
| | DCI format 1 | Terminal specific | Single antenna port, port 5 |
| Transmission mode 8 | DCI format 1A | Public service and terminal specific | If the number of PBCH transmisison ports is 1, single antenna port, port 0. Otherwise, transmit diversity |
| | DCI format 2B | Terminal specific | Dual layer transmisison (port 7 or 8), or single antenna port, port 7 or 8 |
| Transmission mode 9 | DCI format 1A | Public service and terminal specific | Non-MBSFN sub-frame: if the number of PBCH antenna ports is 1, port 0 is used as independent antenna port. Otherwise, transmit Diversity MBSFN sub-frame: port 7 as independent antenna port |
| | DCI format 2C | Terminal specific | 8 transmisison layers, ports 7-14 are used or port 7 or 8 is used as independent antenna port |
| Transmission mode 10 | DCI 1A | Public service and terminal specific | Non-MBSFN sub-frame: if the number of PBCH antenna ports is 1, port 0 is used as independent antenna port. Otherwise, transmit Diversity MBSFN sub-frame: port 7 as independent antenna port |
| | DCI format 2D | Terminal specific | 8 transmisison layers, ports 7-14 are used or port 7 or 8 is used as independent antenna port |

The usage of the DCI format is classified as shown in the following table.

[Table 3]

| DCI format | Contents |
| --- | --- |
| DCI format 0 | It is used for PUSCH scheduling. |
| DCI format 1 | It is used for scheduling of one PDSCH codeword. |
| DCI format 1A | It is used for compact scheduling and random access process of one PDSCH codeword. |
| DCI format 1B | It is used in simple scheduling of one PDSCH codeword having precoding information. |
| DCI format 1C | It is used for very compact scheduling of one PDSCH codeword. |
| DCI format 1D | It is used for simple scheduling of one PDSCH codeword having precoding and power offset information. |
| DCI format 2 | It is used for PDSCH scheduling of UEs configured to a closed-loop spatial multiplexing mode. |
| DCI format 2A | It is used for PDSCH scheduling of UEs configured to an open-loop spatial multiplexing mode. |
| DCI format 2B | DCI format 2B is used for resouce allocation for dual-layer beam-forming of PDSCH. |
| DCI format 2C | DCI format 2C is used for resouce allocation for closed-loop SU-MIMO or MU-MIMO operation to 8 layers. |
| DCI format 2D | DCI format 2C is used for resouce allocation to 8 layers. |
| DCI format 3 | It is used for transmission of a TPC command of a PUCCH and a PUSCH having a 2-bit power adjustment. |
| DCI format 3A | It is used for transmission of a TPC command of a PUCCH and a PUSCH having a 1-bit power adjustment. |
| DCO format 4 | It is used for PUSCH scheduling of one UL cell in multiple antenna transmission mode. |

## \<Carrier aggregation\>

Now, a carrier aggregation (CA) system is described.

The CA system means that multiple component carriers (CCs) are aggregated. The meaning of the existing cell has been changed by the carrier aggregation. According to the carrier aggregation, a cell may mean a combination of downlink carrier aggregation and uplink carrier aggregation or single downlink carrier aggregation.

In addition, in the carrier aggregation, a serving cell may be classified into a primary cell and a secondary cell. The primary cell means a cell operating at a primary frequency, and means a cell in which a UE performs an initial connection establishment procedure or a connection re-establishment procedure with respect to a BS, or a cell indicated by the primary cell in a handover procedure. The secondary cell means a cell operating at a secondary frequency, and is configured when an RRC connection is established and is used to provide an additional radio resource.

As described above, the CA system may support multiple CCs, i.e., multiple serving cells, unlike in a single carrier system.

The CA system may support cross-carrier scheduling. The cross-carrier scheduling is a scheduling method capable of allocating a resource of a PDSCH transmitted using different CCs through a PDCCH transmitted using a specific CC and/or capable of allocating a resource of a PUSCH transmitted using different CCs other than a CC basically linked to the specific CC.

## \<Introduction of small cell\>

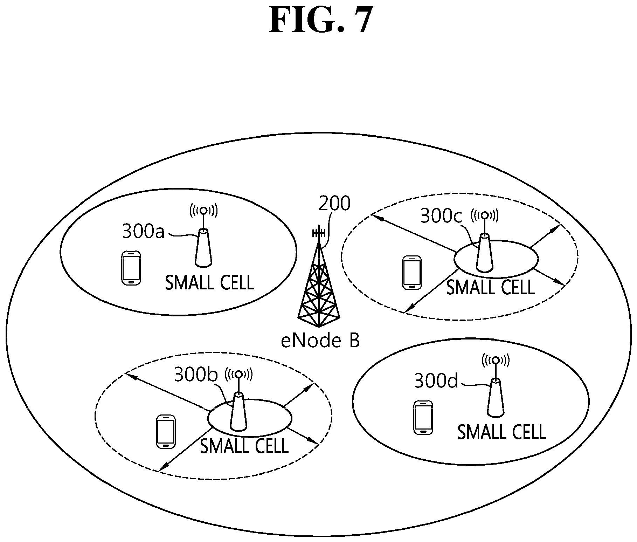

Meanwhile, in a next-generation mobile communication system, it is expected that a small cell of which a cell coverage radius is small is added in the coverage of a legacy cell and that the small cell handles a greater amount of traffic. The legacy cell has a greater coverage than that of the small cell, and thus is also referred to as a macro cell. Hereinafter, it is described with reference to FIG. 7.

FIG. 7 illustrates a heterogeneous network environment in which a macro cell and a small cell co-exist and which is possibly used in a next-generation wireless communication system.

Referring to FIG. 7, it is shown a heterogeneous network environment in which a macro cell served by a legacy eNodeB 200 overlaps with a small cell served by one or more small eNodeBs 300a, 300b, 300c, and 300d. The legacy eNodeB provides a greater coverage than the small eNodeB, and thus is also called a macro eNodeB (MeNB). In the present specification, the macro cell and the MeNB may be used together. A UE having access to the macro cell 200 may be referred to as a macro UE. The macro UE receives a downlink signal from the MeNB, and transmits an uplink signal to the MeNB.

In such a heterogeneous network, coverage holes of the macro cell can be filled by configuring the macro cell as a primary cell (Pcell) and by configuring the small cell as a secondary cell (Scell). In addition, overall performance can be boosted by configuring the small cell as the Pcell and by configuring the macro cell as the Scell.

Meanwhile, since small cells are deployed as described above, an inter-cell interference problem may become more serious. To solve this problem, as illustrated, a coverage size of the small cell may be decreased according to a situation. Alternatively, the small cell may be off and then on again according to the situation.

### <LAA(License Assisted Access)>

Recently, with a growing demand on higher communication capacity in many communication devices, effective utilization of a limited frequency band becomes increasingly more important in a next-generation wireless communication system. In a cellular communication system such as an LTE system, an unlicensed band such as a 2.4GHz band used generally by the legacy WiFi system or an unlicensed band such as a 5GHz band is considered to be utilized in traffic offloading. The unlicensed band may be used by being subjected to carrier aggregation (CA) with the licensed band. The use of the unlicensed band under the support of the licensed band by means of the CA is referred to as licensed assisted access (LAA).

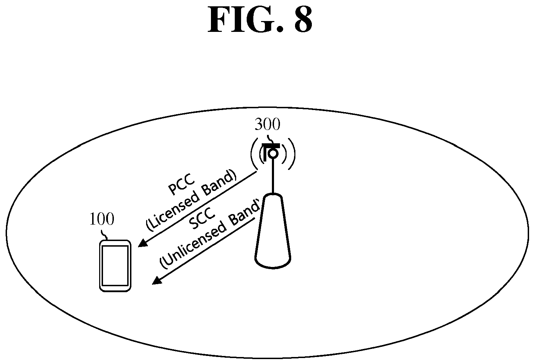

FIG. 8 shows an example of using a licensed band and an unlicensed band with carrier aggregation (CA).

In order to transmit/receive a signal through a carrier of an unlicensed band in which an exclusive use of a specific system is not ensured, as shown in FIG. 8, a small cell 300 may transmit the signal to a UE 100 or the UE may transmit the signal to the small cell 300 by using carrier aggregation (CA) of the unlicensed band and an LTE-A band which is a licensed band. Herein, for example, a carrier of the licensed band may be interpreted as a primary CC (also referred to as PCC or PCell), and a carrier of the unlicensed band may be interpreted as a secondary CC (also referred to as SCC or SCell). However, proposed methods of the present specification can be applied extendedly also in a situation where multiple licensed bands and multiple unlicensed bands are used with a carrier aggregation scheme, and can also be applied to a case where signals are transmitted/received between a BS and a UE only by using the unlicensed band. Further, the proposed methods of the present invention can also be applied extendedly on a system having a different characteristic, in addition to the 3GPP LTE system.

### <Next-generation mobile communication network>

With the success of long term evolution (LTE)/LTE-advance (LTE-A) for 4th generation mobile communication, there is growing interest in further mobile communication, that is, 5th generation (so called 5G) mobile communication, and research is continuously underway.

The 5G mobile communication defined in the International Telecommunication Union (ITU) provides a data transfer rate of up to 20Gbps and a sensible transfer rate of at least 100Mbps anytime anywhere. 'IMT-2020' is a formal name, and aims to be commercialized in the year 2020 worldwide.

The ITU proposes three usage scenarios, e.g., eMBB(enhanced Mobile BroadBand), mMTC(massive Machine Type Communication), and URLLC(Ultra Reliable and Low Latency Communications).

First, the eMBB usage scenario relates to a usage scenario which requires a mobile ultra-broadband.

Next, the URLLC relates to a usage scenario which requires a high reliability and a low latency. For example, a service such as autonomous driving, factory automation, and augmented reality requires a high reliability and a low latency (e.g., a latency less than or equal to 1ms). At present, a latency of 4G (LTE) is statistically 21-43ms (best 10%), 33-75ms (median). This is insufficient to support a service requiring the latency less than or equal to 1ms. Therefore, in order to support the URLLC usage scenario, it is considered in a 3GPP standard group to re-define a radio frame structure by defining a transmission time interval (TTI) to be less than or equal to 1ms. In addition, it is considered to propose a new radio access technology (new RAT or NR).

In the NR, it is considered to use a downlink subframe in reception from the BS and to use an uplink subframe in transmission to the BS. This approach may be applied to paired spectra and unpaired spectra. A pair of spectra means that two carrier spectra are included for downlink and uplink operations. For example, in the pair of spectra, one carrier may include a downlink band and an uplink band which are paired to each other.

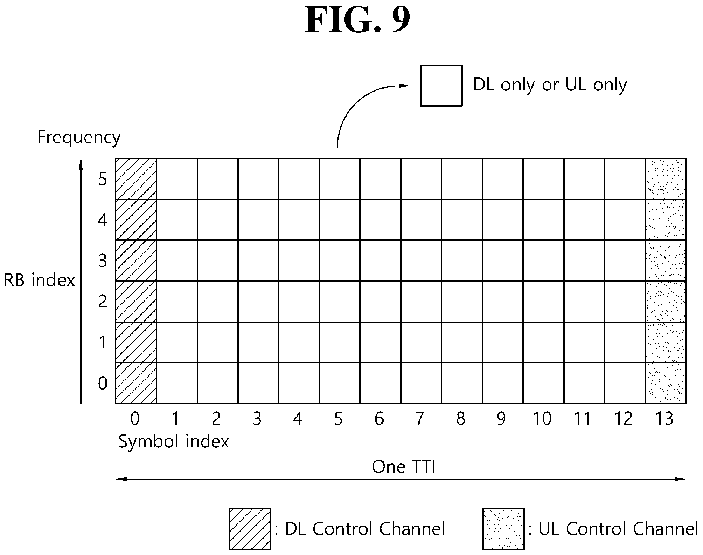

FIG. 9 shows an example of a subframe type in NR.

A transmission time interval (TTI) shown in FIG. 9 may be referred to as a subframe or slot for NR (or new RAT). A subframe (or slot) of FIG. 3 may be used in a TDD system of NR (or new RAT) to minimize a data transfer delay. As shown in FIG. 3, the subframe (or slot) includes 14 symbols, similarly to a current subframe. A first symbol of the subframe (slot) may be used for a DL control channel, and a last symbol of the subframe (slot) may be used for a UL control channel. The remaining symbols may be used for DL data transmission or UL data transmission. According to such a subframe (slot) structure, downlink transmission and uplink transmission may be performed in sequence in one subframe (or slot). Therefore, downlink data may be received within the subframe (or slot), and uplink ACK/NACK may be transmitted within the subframe (or slot). The subframe (or slot) structure may be referred to as a self-contained subframe (or slot). The use of the subframe (or slot) structure has an advantage in that a final data transmission latency can be minimized due to a decrease in a time required to retransmit erroneously received data. The self-contained subframe (or slot) structure may require a time gap in a process of transitioning from a transmission mode to a reception mode or from the reception mode to the transmission mode. To this end, some OFDM symbols may be set to a guard period (GP) when transitioning from DL to UL in the subframe structure.

**<Problems when applying legacy PDCCH to NR>**

In the legacy LTE/LTE-A system, a UE performs blind decoding on multiple search spaces (SS) in order to receive control information transmitted to the UE from a BS through a control channel such as a PDCCH. In general, in the SS, control information suitable for each purpose is transmitted in a DCI format.

However, since the UE has to perform blind decoding (BD) for the PDCCH in the multiple SSs, there is a problem in that complexity is increased, and a latency is increased.

In particular, an order of performing the BD on the multiple SSs is not separately predetermined. Therefore, when a control channel such as the legacy PDCCH is used in the NR, there is a problem in that a low latency of URLLC required in next-generation mobile communication cannot be satisfied.

**<Disclosure of the present specification>**

Accordingly, the disclosure of the present specification aims to propose a method capable of rapidly performing blind decoding on multiple search spaces (SS) so that a terminal, that is, a UE, can satisfy a latency required in a target service or application.

Specifically, in order to increase system efficiency, the disclosure of the present specification proposes a method of determining a blind decoding order for multiple SSs according to delay sensitivity required in a target service or application. Accordingly, the latency can be decreased and the system efficiency can be improved.

According to the method proposed in the present specification, a terminal, i.e., a UE, rapidly decodes DCI information corresponding to the terminal in a specific SS, and thereafter rapidly starts downlink data reception or uplink data transmission indicated in a corresponding DCI, thereby reducing an overall latency. Meanwhile, if a desired DCI is decoded in any SS, the UE may perform an additional operation for reliability verification on the successful decoding, instead of stopping the blind decoding for the remaining other SSs.

Hereinafter, a search space mentioned in the present specification may mean a decoding candidate of a PDCCH. In addition, although the following description focuses on the PDCCH, the concept of the present specification may also be applied to a control channel with another name, for example, an enhanced PDCCH (EPDCCH) or an MPDCCH.

**I. First proposal: PDCCH decoding order**

When a UE needs to perform blind decoding within a single subframe or an TTI duration on multiple search spaces for monitoring a PDCCH, it is possible to decode the multiple search spaces for monitoring the PDCCH according to a predetermined order. In this case, if a transmission priority of information transmitted through a PDCCH or DL/UL data scheduled by the PDCCH (i.e., scheduled by DL allocation or a DL grant/UL grant) is high or a short latency (or a high delay sensitivity) is required, the BS may transmit the PDCCH on a search space having an earlier decoding order. The UE may perform blind decoding on the search space according to an agreed decoding order. In this case, a time required to decode the PDCCH in each search space is determined by a decoding order.

Meanwhile, in order for the UE to decode the multiple search spaces in a predetermined order, there is a need to distinguish the multiple search spaces from one another. This will be described as follows with reference to the drawings.

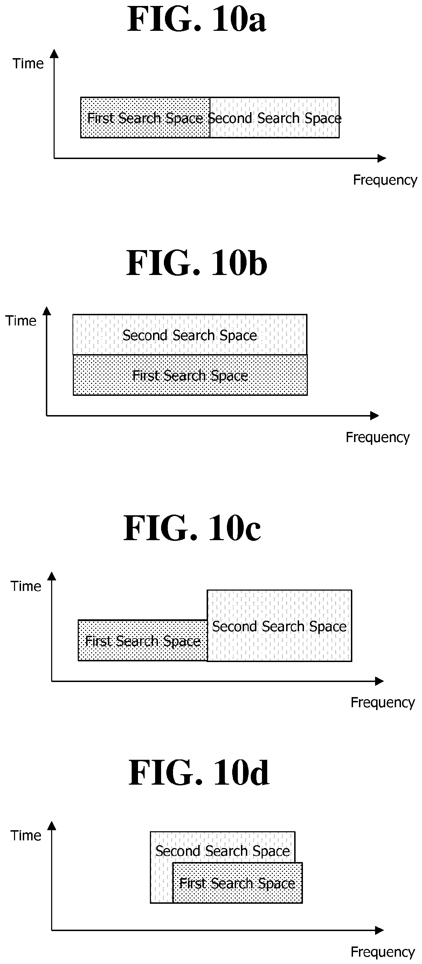

FIG. 10a to FIG. 10d are examples showing locations of multiple search spaces.

According to the example shown in FIG. 10a, a first search space and a second search space can be distinguished from each other on a frequency axis. In addition, according to the example shown in FIG. 10b, a first search space and a second search space can be distinguished from each other on a time axis. In addition, according to the example shown in FIG. 10c, a first search space and a second search space can be distinguished from each other on both a time axis and a frequency axis. Meanwhile, according to the example shown in FIG. 10d, a first search space and a second search space start at the same point on a time axis and thus cannot be distinguished from each other, but can be distinguished by an ending point.

As such, the UE can distinguish search spaces through the distinguishing on the time and/or frequency axes. If a decoding order for each search space is predetermined, decoding may be performed on the search space according to the decoding order.

Meanwhile, the decoding order may be determined based on minimization of a latency of a UE operation or a latency of scheduling of UL/DL data (and an HARQ operation accompanied thereto). According to this, the UE may perform blind decoding of a PDCCH within a search space according to a decoding order predetermined by the BS or predetermined in the UE, and upon acquiring control information corresponding to the UE, may directly proceed to an operation accompanied thereto. For example, assume a situation in which the BS transmits a PDCCH containing scheduling information (i.e., a DL/UL grant) for DL/UL data within a first search space having a higher priority of a decoding order (i.e., an earlier decoding order). Then, after performing blind decoding on the PDCCH within the first search space, the UE may preferentially perform an operation of decoding/encoding the DL/UL data in comparison with an operation indicated by the PDCCH within a different second search space. That is, the DL/UL data scheduled by the PDCCH in the first search space may be decoded/encoded more preferentially than other data. In this case, there is an advantage that latency reduction can be achieved in comparison with a case where a subsequent operation is performed only after all search spaces are subjected blind decoding, or where blind decoding is randomly performed without a predetermined order.

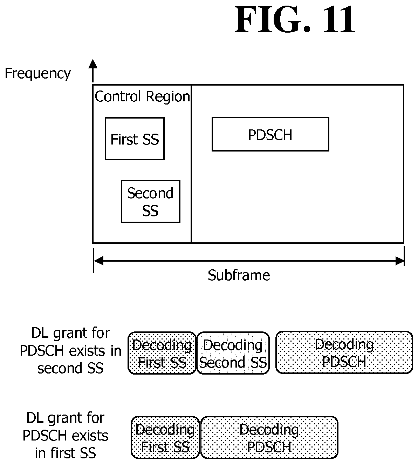

FIG. 11 is an example showing a latency reduction effect according to a first proposal of the present specification.

Referring to FIG. 11, a first SS and a second SS are present within a control region of a subframe. In this case, it is assumed that a blind decoding order is determined in the order of the first SS and the second SS. If a PDCCH including scheduling information (i.e., DL grant) of a PDSCH is present in the second SS, as illustrated, a UE may decode the PDSCH after performing blind decoding on all of the first SS and the second SS. However, if the PDCCH including the scheduling information (i.e., DL grant) of the PDSCH is present in the first SS, the UE may decode the PDSCH immediately after performing blind decoding on the first SS.

Meanwhile, a chain relation of a coding scheme may be considered as another method of determining the decoding order. For example, assuming a case where a BS uses the same channel coding scheme (e.g., tail-biting convolutional code (TBCC)) and coding chain for DL control information and DL data information, the BS may assign the decoding order to the UE in the order of a UL grant and a DL grant. More specifically, for example, the UE preferentially performs blind decoding on a search space determined to receive the UL grant. If a UL grant is not detected but DCI including a DL grant is detected, the UE may stop blind decoding and immediately perform an operation of decoding DL data indicated by the DL grant.

The order of blind decoding for the search space may be determined to be fixed or may be determined to be changed dynamically. If the order is fixed, the BS does not have to transmit additional information to the UE in order to report a coding order. For example, if a PDCCH candidate index is given, the UE may operate to preferentially perform blind decoding on the PDCCH candidate corresponding to a low index. On the other hand, if the BS is capable of determining the decoding order by dynamically changing the decoding order, an operation for matching the decoding order is required between the BS and the UE. For example, if there are two search spaces, i.e., a first search space (e.g., SS1) and a second search space (e.g., SS2), and a decoding order is required, the BS may determine the decoding order according to features of target services and features of applications, and thereafter may report it to the UE. For example, the BS may deliver the decoding order to the UE by using a higher layer signal (e.g., SIB, RRC signal). If the BS changes the decoding order, the UE may perform an operation such as SIB change notification, RRC reconfiguration, or the like in order to reconfigure the decoding order. If there is a change in the decoding order but information thereon is not delivered to the UE, an order by which the UE expects a search space may differ from the decoding order changed by the BS. Further, after performing blind decoding of the PDCCH within the search space, a timing at which the UE completes DL data decoding/UL data encoding performed subsequently may differ from a timing expected by the BS. As such, since timing of an operation accompanied after the blind decoding is performed within the search space may differ from that expected by the BS, a timing problem may occur such as a mismatch of a subframe number between the BS and the UE. In order to prevent such a problem from occurring, if the BS has changed the decoding order for the search space, information on the changed decoding order may be delivered to the UE more preferentially than other information.

The decoding order may be determined cell-specifically, but may also be determined UE-specifically. Alternatively, if several UEs are grouped by a particular purpose, the decoding order may be determined UE group-specifically. In case of the decoding order determined cell-specifically, since all UEs expect the same decoding order, configuration information for the decoding order may be delivered to the UE through information to be broadcast such as a system information block (SIB). Meanwhile, an example in which the BS determines the decoding order in the UE group-specifically is described as follows. The BS may determine an additional decoding order for each UE group according to types of target services and applications, and may deliver this to the UE through SIB or an RRC signal. Alternatively, the BS may transmit decoding order change notification or scheduling information through an L1 signal (e.g., PDCCH), and may transmit information on the changed decoding order through the PDSCH. On the other hand, an example in which the BS determines the decoding order UE-specifically is described as follows. The BS may determine an additional decoding order for each UE according to types of target services and applications, and may transmit this to the UE through an RRC signal or an L1 signal. An example for the UE group-specific or UE-specific decoding order is as follows. First, in case of a service which preferentially requires to minimize a latency of DL data transmission, it may be determined to preferentially perform a decoding order for a DL grant (compared to a UL grant). Alternatively, on the contrary, if it is required to minimize a latency of UL data transmission, it may be determined to preferentially perform a decoding order for a UL grant (compared to a DL grant). Alternatively, the decoding order may be determined according to whether DL control information (e.g., PDCCH) and DL data (e.g., PDSCH) share the same channel coding scheme for each UE group or UE by considering the channel coding scheme.

If the UE determines a specific search space as a search space assigned to the UE through blind decoding and proceeds to a next operation, blind decoding for the remaining search spaces may not be stopped but be continued. For example, assume a situation of using different coding chains such as a case where a control channel (e.g., PDCCH) uses a tail-biting convolution code (TBCC) and a data channel (e.g., PDSCH) uses a turbo code. In this case, even if the UE successfully performs blind decoding of a search space and thereafter performs decoding of a subsequent data channel (e.g., PDSCH) before blind decoding for another search space is complete, blind decoding on the remaining search spaces may be continuously performed to identify whether there is a search space having a higher priority (or reliability). If a subsequent search space (e.g., SS2) has a higher priority (or a higher reliability) than a previous search space (e.g., SS1), the UE may determine to stop an operating being performed (e.g., DL data decoding or UL data encoding indicated by a PDCCH determined by a previous search space (e.g., SS1)) and to start a new operation (e.g., DL data decoding or UL data encoding indicated by a PDCCH detected by a subsequent search space (e.g., SS2)). Alternatively, according to a predetermined decoding order, it may be determined to immediately perform a subsequent operation only when DCI is detected within a specific search space. For example, if a specific DCI is detected in a search space (e.g., SS1 to SS3) of first to third decoding orders, an operation indicated by the specific DCI may start before blind decoding for another search space (e.g., SS4) is complete. However, when the specific DCI is detected in another search space (e.g., SS5), it may be determined to start an operation indicated by the specific DCI after the entire blind decoding is complete.

As such, when a short latency (or high delay sensitivity) is required, an earlier decoding order is assigned and a transmission timing of accompanied UL data (e.g., ACK/NACK) or a reception timing of DL data may be allowed to be earlier. On the other hand, for an operation not sensitive to the latency, reliability may be increased so that the UE is prevented from performing an unnecessary operation.

## 1I. Second proposal: ACK/NACK timing

A second proposal proposes a method of determining the ACK/NACK transmission timing corresponding to transmission/reception of DL data differently according to a decoding order of a search space (detection timing of a DL grant). When the decoding order of the search space is determined, there may be a difference in a timing at which DCI information is detected through each search space. For example, the higher the priority of the decoding order or the earlier the decoding order of the search space, the earlier the time at which reception/decoding is complete on DL data corresponding to a DL grant transmitted through a corresponding search space. In addition, when the decoding order is preferentially determined for the purpose of latency minimization, DL data scheduled through a search space having a decoding order which has a priority may be data more sensitive to the latency (e.g., voice or video call data which does not allow transmission delay). In this case, likewise, an ACK/NACK transmission timing for the DL data needs to be determined to be earlier. In other words, a transmission timing of HARQ-ACK corresponding to reception of DL data (e.g., data 1) scheduled from a DL grant detected through a search space (e.g., SS1) having an earlier decoding order may be determined to be earlier than transmission timing of HARQ-ACK corresponding to reception of DL data (e.g., data 2) scheduled from a DL grant detected through a search space (e.g., SS2) having a later decoding order. That is, transmission of the HARQ-ACK corresponding to the data 1 may be determined to have a small delay. In order to enable such an operation, while attempting PDCCH detection within a search space (e.g., SS1) according to the given decoding order, when a DL grant (or PDCCH for scheduling DL data) is detected through a specific search space (e.g., SS2), the UE may start decoding of DL data scheduled by the DL grant from a corresponding detection time point.

When an ACK/NACK timing is determined according to a decoding order of a search space, other factors may be further considered in addition to the latency. For example, in the presence of the first search space (SS1) and the second search space (SS2), a decoding order of the SS1 may be determined to be earlier than that of the SS2, whereas ACK/NACK timing related to the SS2 may be determined to be earlier than ACK/NACK timing related to the SS1. Specifically, for example, assume that a PDSCH related to the SS1 has a greater size than a PDSCH related to the SS2. In this case, since a demodulation time duration of a first PDSCH scheduled by a first PDCCH in the SS2 is longer, a decoding order of the SS1 may be determined to be earlier in terms of the entire delay. However, since a second PDSCH scheduled by a second PDCCH within the SS2 is complete earlier, a transmission timing of corresponding ACK/NACK may be determined to be earlier.

On the other hand, in regards to the decoding order of the search space, a corresponding ACK/NACK transmission timing may be determined in unit of search space groups. For example, in the presence of N search spaces, the N search spaces may be grouped into K groups. In this case, an ACK/NACK transmission timing may be designated corresponding to each group, and there may be K ACK/NACK transmission timings. The UE recognizes to which group each search space belongs, and determines an ACK/NACK transmission timing corresponding to DL data by using this information. The K groups may be made of a group of search spaces having temporally successive decoding orders. For example, if a decoding order is assigned to N search spaces and the search spaces are divided into two groups, search spaces having 1st to Mth decoding orders may be determined to a group 1 of the search spaces, and search spaces having (M+1)th to Nth decoding orders may be determined to a group 2.

An ACK/NACK transmission timing corresponding to each search space or search space group may be designated in unit of groups. For example, in the presence of N search spaces (or search space groups), there may be one or more ACK/NACK transmission timings at which an $n^{th}$ search space (or search space group) can be selected, and the number thereof may be expressed by M(n). Such an ACK/NACK transmission timing group may be predefined according to a pre-agreed pattern. A criterion of selecting an ACK/NACK transmission timing to be used by the UE from the ACK/NACK transmission timing group may be reported to the UE through a DCI or an RRC signal by being designated by the BS, or may be dynamically selected by the UE. In this case, there is an advantage in that the BS can increase efficiency in terms of operating the entire system and can prevent an ACK/NACK collision between the UEs. On the contrary, the UE may dynamically select the ACK/NACK transmission timing from the ACK/NACK transmission timing group. In this case, there is an advantage in that an ACK/NACK transmission timing suitable for a situation of each UE can be selected while decreasing a signaling overhead of the BS.

An example of determining the ACK/NACK transmission timing according to the decoding order is described below in greater detail. First, assume that there are N decoding orders, and N ACK/NACK transmission timings corresponding to the respective decoding orders are $\{T_{ACK/NACK}(1), \dots, T_{ACK/NACK}(N)\}$. In a situation of this example, if the UE detects a DL grant in an $n^{th}$ decoding order, an ACK/NACK transmission timing may be defined by using $T_{ACK/NACK}(n)$. This example may be equally applied even if the search space is divided into N groups. In this case, the total number of search spaces groups is N, and each group corresponds to one of N transmission timings of ACK/NACK. In addition, the above example may be equally applied even if the ACK/NACK transmission timing is grouped. More specifically, assuming that there are N search spaces and there are M(n) transmission timings of ACK/NACK associated with the $n^{th}$ search space, the total number of transmission timings of ACK/NACK may be $\sum_{n=1}^{N} M(n).$ In this case, an ACK/NACK transmission timing included in a first group may share the same value as an ACK/NACK transmission timing existing in a second group. In addition, the above example is equally applicable even if both the search space and the ACK/NACK transmission timing are groupped. ACK/NACK transmission timings assigned to the respective search spaces of search space group may or may not be consecutive to each other. A case where the ACK/NACK transmission timings are not consecutive may occur in a process of designating locations at which ACK/NACK is available due to a constraint of an ACK/NACK resource that can be operated in a system.

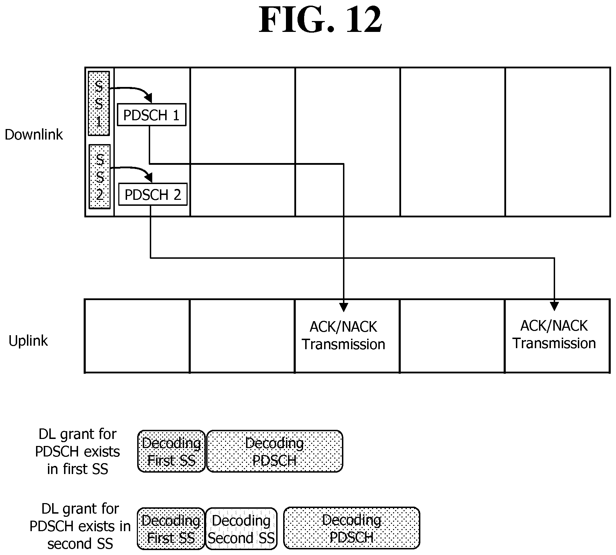

FIG. 12 shows an example of an ACK/NACK transmission timing according to a second proposal of the present specification.

It is assumed in FIG. 12 that there are two search spaces (e.g., SS1 and SS2), and a decoding order is determined in the order of the SS1 and the SS2. In addition, it is shown in FIG. 12 that a PDCCH 1 including scheduling information (i.e., a DL grant) of a PDSCH 1 is present in the SS1, and a PDCCH including scheduling information (i.e., a DL grant) of a PDSCH 2 is present in the SS2. In the example of FIG. 12, since a predetermined decoding order of the SS1 is earlier, it is shown that an ACK/NACK transmission timing for the PDSCH 1 scheduled by a PDCCH within the SS1 is earlier.

Meanwhile, in case of UEs transmitting data relatively less sensitive to a latency, an ACK/NACK transmission timing may be determined according to a system situation. For example, after an ACK/NACK transmission timing for UEs requiring a low latency is preferentially determined, UEs tolerant to a higher latency may be determined to use an ACK/NACK transmission timing which does not collide with the predetermined ACK/NACK timing. Alternatively, in case of the UEs tolerant to the higher latency, it may be determined to use any one of available ACK/NACK time resources determined by considering different UL/DL transmission, according to a decoding order of a search space. That is, the UE may determine an ACK/NACK transmission timing corresponding to DL data on the basis of a decoding order by which a DCI corresponding to the UE is detected in a search space.

Meanwhile, the ACK/NACK transmission timing may be determined based on which search space a specific DCI is included in. For example, assume that there are N search spaces (or search space groups). In this case, the ACK/NACK transmission timing may vary depending on which search space (or search space group) the DCI is included in. For example, assume that there are two search spaces, i.e., an SS1 and an SS 2. In this case, if a DCI associated with ACK/NACK transmission is present within the SS1, any one timing may be selected from ACK/NACK transmission timing group $\{T_{ACK/NACK}^{SS1}(1), \dots, T_{ACK/NACK}^{SS1}(N_1)\}$. Alternatively, if the DCI associated with the ACK/NACK transmission is present in the SS2, any one timing may be selected from ACK/NACK transmission timing group $\{T_{ACK/NACK}^{SS2}(1), \dots, T_{ACK/NACK}^{SS2}(N_2)\}$. In this case, each ACK/NACK transmission timing group may be configured to have a different number of ACK/NACK transmission timings, and one ACK/NACK transmission timing may be present in each group. Alternatively, it may be determined such that an ACK/NACK transmission timing (or ACK/NACK transmission timing group) differs for each DCI. That is, since each DCI contains information for a different purpose, the ACK/NACK transmission timing may also be individually determined for the purpose of each DCI. For example, in case of a DCI requiring a low latency, the ACK/NACK transmission timing may be designated to be much earlier, and if a great amount of data is included in an accompanied PDSCH, it may be determined such that the ACK/NACK transmission timing occurs late.

Whether to use the determining of the ACK/NACK transmission timing as described above may be configured by a higher layer signal from a BS. For example, the BS may precisely designate candidates for which the UE can use the ACK/NACK transmission timing through specific SIB information. In this case, there may be a case where only one candidate exists for a transmission timing of ACK/NACK transmitted by the BS. Alternatively, the BS may inform the UE of whether determining of the ACK/NACK transmission timing through an RRC signal is on/off.

**III. Third proposal: UL data timing**

The third proposal proposes a method of determining a UL data transmission timing differently according to a decoding order of a search space. That is, according to the third proposal, the UL data transmission timing may be determined according to a decoding order of a search space in which a UL grant is detected. If the UL grant is transmitted in a search space having an earlier decoding order, the UL grant may be for scheduling of UL data transmission requiring a low transmission delay. Therefore if the UE detects the UL grant within a search space having a priority of the decoding order or having an earlier decoding order, the UE may determine the UL data transmission timing to be earlier (e.g., to have a small gap between a reception time point of the UL grant and a transmission time portion of the UL grant) in order to decrease a UL data transmission latency. As such, the UE may determine a corresponding UL data transmission timing on the basis of a decoding order of a search space in which a DCI corresponding to the UE is detected. More specifically, a transmission timing of UL data (e.g., UL data 1) scheduled from a UL grant detected through a search space (e.g., SS1) having an earlier decoding order may be configured to be earlier than a transmission timing of UL data (e.g., UL data 2) scheduled from a UL grant detected through a search space (e.g., SS2) having a later decoding order. In order to enable such an operation, the UE may start encoding of UL data immediately after detecting a UL grant (scheduling information on UL data) within a specific search space while attempting PDCCH detection for a search space according to a given decoding order.

The UL data transmission timing may be determined by further considering other factors in addition to the decoding order of the search space. For example, assume that there are two search spaces, and the respective search spaces are defined as an SS1 and an SS2. In this case, assume that a decoding order of the SS1 is earlier, and a decoding order of the SS2 is later. However, there may be a situation where a UL data transmission timing associated with the SS2 is configured to be earlier than a UL data transmission timing associated with the SS1. For example, there may be a difference in a data transmission available timing due to a difference of a service or application or the like between a UE using the SS1 and a UE using the SS2. More specifically, for example, when the UE using the SS1 lacks in complexity and computation capability and thus it takes a long time required until DL data is transmitted after starting blind decoding of the SS1, a UL data transmission timing of the UE using the SS2 may be designated to be earlier instead of assigning an earlier decoding order to the SS1 for the purpose of reducing an overall system latency.

Meanwhile, the UL data transmission timing may be determined in unit of search space groups. For example, if there are N search spaces, the N search spaces may be divided into K groups.

In this case, the UL data transmission timing may be designated corresponding to each group. For example, there may be K UL data transmission timings. The UE may recognize to which group each search space belongs, and may determine the UL data transmission timing by using this information. The K groups may be made of a group of search spaces having temporally successive decoding orders. For example, if a decoding order is assigned to N search spaces and the search spaces are divided into two groups, search spaces having 1st to Mth decoding orders may be determined to a group 1, and search spaces having decoding orders (M+1)th to Nth may be determined to a group 2.

A UL data transmission timing corresponding to each search space or search space group may be designated in unit of groups. For example, assume that there are N search spaces (or search space groups). There may be one or more UL data transmission timings at which an nth search space (or search space group) can be selected, and the number thereof may be expressed by M(n). Such a UL data transmission timing group may be predefined according to a pre-agreed pattern. A criterion of selecting a transmission timing to be used by the UE from the transmission timing group may be reported to the UE through a DCI or an RRC signal by being designated by the BS, or may be dynamically selected by the UE. The method in which the BS designates the transmission timing and thereafter informs the UE of this has an advantage in that the BS can increase efficiency in terms of operating the entire system and can prevent an ACK/NACK collision between the UEs. Therefore, the method in which the BS designates the transmission timing and thereafter informs the UE of this may be effectively applied to a grant-based UL transmission method. Alternatively, the method in which the BS designates the transmission timing and thereafter informs the UE of this may be effectively applied to prevent a transmission collision between UEs also in a contention-based UL transmission method. Alternatively, the UE may autonomously and dynamically determine the UL data transmission. As such, when the UE autonomously determines the transmission timing, there is an advantage in that an overhead can be reduced since signaling of the BS is not necessarily transmitted.

Meanwhile, an example of determining a UL data transmission data is described as follows. Assume that there are N decoding orders, and N transmission timings $\{T_{ULdata}(1), ... , T_{ULdata}(N)\}$ correspond to the respective decoding orders. In this case, if a UE has detected a UL grant at an $n^{th}$ decoding order, the UE may determine a UL data transmission timing by using $T_{ULdata}(n)$. For another example, assume that the total number of search space groups is N, and each group corresponds to one of N transmission timings. The above example may also be equally applied in this case. Specifically, assuming that there are N search spaces and there are M(n) UL data transmission timings corresponding to the $n^{th}$ search space, the total number of UL data transmission timings may be $\sum_{n=1}^{N} M(n).$ In this case, a first transmission timing included in a first transmission timing group may share the same value as a second transmission timing value existing in a second transmission timing group. Meanwhile, the above example is equally applicable to a case where both the search space and the transmission timing are grouped. Transmission timings assigned to the respective search spaces of search space group may or may not be consecutive to each other. A case where the transmission timings are not consecutive may occur due to a constraint of an ACK/NACK resource that can be operated in a system.

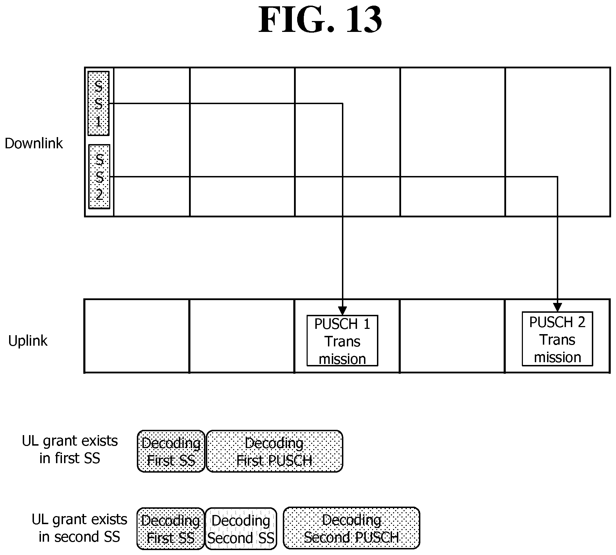

FIG. 13 shows an example of a UL transmission timing according to a third proposal of the present specification.

It is assumed in FIG. 13 that there are two search spaces (e.g., SS1 and SS2), and a decoding order is determined in the order of the SS1 and the SS2. In addition, it is shown in FIG. 13 that a PDCCH 1 including scheduling information (i.e., a UL grant) of a PDSCH 1 is present in the SS1, and a PDCCH including scheduling information (i.e., a UL grant) of a PDSCH 2 is present in the SS2. In the example of FIG. 13, since a predetermined decoding order of the SS1 is earlier than that of the SS2, it is shown that an ACK/NACK transmission timing for the PDSCH 1 scheduled by a PDCCH within the SS1 is earlier than that for PDSCH 2.

Meanwhile, the above description may allow a UL data transmission timing to be determined depending on which search space a specific DCI is located in. Specifically, if there are N search spaces (of search space groups), the UL data transmission timing may be determined depending on which search space (or search space group) the DCI is located in. For example, if a DCI including scheduling information DL data exists in the SS1 in a situation where there are two search spaces, i.e., the SS1 and the SS2, any one transmission timing may be selected from a transmission timing group, i.e., $\{T_{ULdata}^{SS1}(1), ..., T_{ULdata}^{SS1}(N_1)\}$. Alternatively, if the DCI including the scheduling information of the UL data exists in the SS2, any one transmission timing may be selected from a transmission timing group, i.e., $\{T_{ULdata}^{SS2}(1), ... , T_{ULdata}^{SS2}(N_2)\}$. In this case, each group may be configured to have a different number of UL data transmission timings. There may be one transmission timing in each group. Alternatively, since each DCI contains information for a different purpose, the UL data transmission timing may also be individually determined for the purpose of each DCI. For example, in case of a DCI requiring a low latency, the UL data transmission timing may be designated to be much earlier. Otherwise, if there is a constraint in a transmission available PUSCH region, it may be determined such that the UL data transmission timing occurs late.

Whether to use the determining of the UL data transmission timing as described above may be configured by a higher layer signal from a BS. For example, the BS may precisely designate candidates for which the UE can use the UL data transmission timing through specific SIB information. In this case, there may be a case where only one candidate exists for a transmission timing of UL data transmitted by the BS. Alternatively, the BS may inform the UE of whether determining of the UL data transmission timing through an RRC signal is on/off.

## IV. Fourth proposal: Search space decoding order and PDCCH symbol allocation

It may be considered that the above description regarding the determining of the decoding order of the search space is extendedly applied across two or more time units. For example, if a PDCCH can transmit two symbols, each symbol may be used as a separate search space. In this structure, search spaces having indices 1 to M may be assigned to a $1^{st}$ symbol, and search spaces having indices M+1 to N may be assigned to a $2^{nd}$ symbol. In this case, a decoding order of a search space assigned to each symbol may be determined in the form of a function associated with a symbol index. For example, in terms of latency minimization, search spaces assigned to earlier symbol indices may have earlier decoding orders. Alternatively, if a location of PDCCH symbol expected for the UE is behind a location of the 1st symbol in a situation of analog beamforming, retransmission, or the like, a decoding order may be determined such that the UE preferentially performs blind decoding on a search space with a late symbol index.

Alternatively, if there is a constraint in a transmittable PUSCH region, a decoding order may be determined according to a location of a symbol used by a search space, and thus operations accompanied thereto may be determined. For example, when there are two available PDCCH symbols, an earlier decoding order may be assigned if the SS1 exists in the 1st symbol, and a later decoding order may be assigned if the SS2 exists in the 2nd symbol. This may be determined depending on which delay property the information accompanied by the search space has. If a low latency is desired, a corresponding search space may be located at an earlier symbol, and a decoding order may also be determined to be earlier. On the other hand, in a situation of being not sensitive to the latency, a corresponding search space may be assigned to a later symbol location, and the search space may be determined to have a decoding order later than another search space.

Meanwhile, if two or more symbols can be used as a candidate capable of configuring a search space, a UL data (or ACK/NACK) transmission timing may be determined depending on which symbol the search space is located in. For example, if two symbols can be used for the PDCCH, it may be determined to transmit UL data (or ACK/NACK) in an $n^{th}$ symbol when blind decoding of a search space is successful at a location of a 1st symbol, and to transmit UL data (or ACK/NACK) in an $(n+1)^{th}$ symbol when blind decoding of a search space is successful in the 2nd symbol.

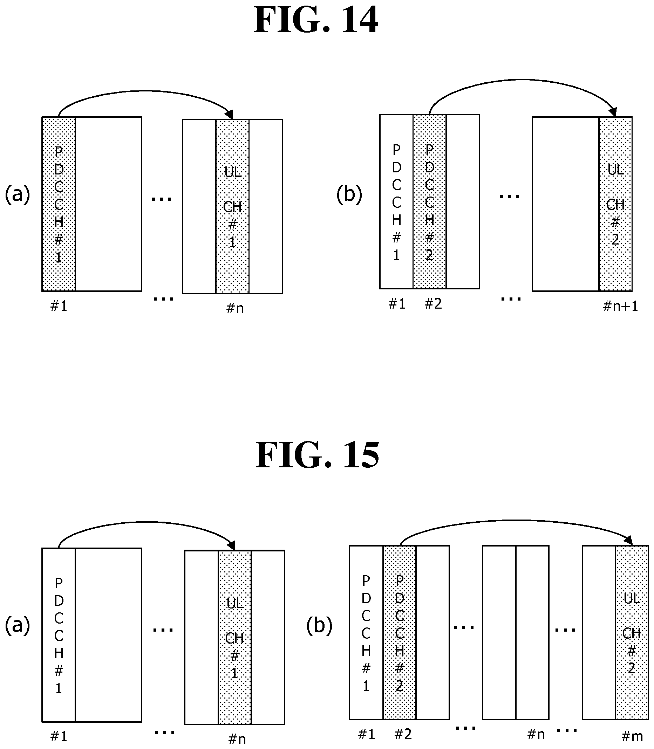

FIG. 14 shows another example of a UL transmission timing according to a fourth proposal of the present specification, and FIG. 15 shows another example of a UL transmission timing according to the fourth proposal of the present specification.

As can be seen with reference to FIG. 14, a UL data (or ACK/NACK) transmission timing corresponding to a search space of a 1st symbol and a UL data (or ACK/NACK) transmission timing corresponding to a search space of a 2nd symbol may be different from each other on a time axis.

In addition, as can be seen with reference to FIG. 15, a UL data (or ACK/NACK) transmission timing may be located in an $n^{th}$ symbol in a search space of a 1st symbol, and a UL data (or ACK/NACK) transmission timing corresponding to a search space of a 2nd symbol may be located in an $m^{th}$ symbol.

Meanwhile, in addition to changing of the ACK/NACK transmission timing according to a symbol location at which the search space is located, a method of transmitting data may be changed. For example, if it is assumed that a gap between a symbol on which a control channel is transmitted and a symbol on which ACK/NACK is transmitted is constant, an ACK/NACK transmission location may be changed depending on a location of the symbol on which the control channel is transmitted. In this case, a constant gap may be maintained since a data transmission time is relatively decreased. Alternatively, if an ACK/NACK transmission timing is fixed, the number of symbols on which data is transmitted may be changed according to a symbol location at which a search space is located. This will be described as follows by taking examples. If a symbol location at which a search space in which a control channel exists is a 1st symbol, DL data may be received through N symbols. If the symbol location at which the search space in which the control channel exists is a 2nd symbol, the DL data may be received through (N-1) symbols. Alternatively, if a data transmission time is constant, instead of transmitting data across last one or several symbols, the UE may be prevented from performing decoding by performing padding. This has an effect similar to reducing of a size of an effective transmission duration. A similar method may also be used in UL transmission. If a time required until UL data transmission starts from a UL grant is constant as GAP-UL and the UL data transmission start point is determined, padding may be transmitted instead of data at the UL data start point when the UL grant is received late. In addition, the start of the UL data transmission may be delayed as much as the UL grant is delayed. Accordingly, the reducing of the data transmission duration can be solved through rate matching or puncturing.

This principle is also applicable to retransmission of a network. Assuming that retransmission is performed in a next subframe/slot, it may be configured such that a gap of GAP-RETX may always exist by considering an ACK/NACK transmission time. In this case, it may be assumed that a location of an OFDM symbol on which the UE performs blind decoding on a grant for retransmission is predetermined, or a search space is predetermined.

In this case, the UE and the BS may share in advance which search space or OFDM symbol a corresponding DCI is located in. Alternatively, the BS may operate by assuming that the UE always operates on a first-detection basis. The followings may be considered as a method of sharing the information in advance.

Information indicating that initial DL/UL transmission scheduling is located in a 1st symbol, and information indicating that DL/UL retransmission scheduling DCI is located in the 1st symbol + m OFDM symbols. Herein, m is a retransmission count (alternatively, m may be fixed to 1 irrespective of the retransmission count).

Information on candidates 0~K of blind decoding mapped to a 1st OFDM symbol and information on candidates K+1~M of blind decoding mapped to the remaining OFDM symbols. A subset of the candidate may be configured to the UE through a higher layer signal or a dynamic signal (e.g., common or group DCI or UE-specific DCI).

Information on a search space separation between downlink and uplink and a search space mapped to OFDM symbols of different sets.

As such, the concept of reporting in advance the information indicating which search space or OFDM symbol the DCI is located in is also applicable between subframes. In addition, the concept is also applicable to a situation where a slot is floating. In the situation where the slot is floating, the concept may be applied based on a $1^{st}$ symbol (irrespective of an index).

Meanwhile, a UL data (or ACK/NACK) transmission timing associated with each symbol location may vary depending on which symbol a search space and a DCI accompanied thereto are located in. For example, a UL data (or ACK/NACK) transmission timing in a case where a PDCCH (including a UL grant or a DL grant) is located in a $1^{st}$ symbol may be earlier than a UL data (or ACK/NACK) transmission timing in a case where the PDCCH is located in a $2^{nd}$ symbol. A method in which a UL data (or ACK/NACK) transmission timing is determined according to a symbol index of a search space in which a DCI is transmitted has an advantage in that a delay in a self-contained structure shown in FIG. 9 can be further decreased. In order to process DL data transmission and ACK/NACK in unit in which several symbols are aggregated such as one slot (or subframe) in the self-contained structure shown in FIG. 9, a shorter decoding/demodulation time is required. In addition, a time gap is required between downlink and uplink in order to read downlink information and prepare ACK/NACK transmission. Therefore, if it takes a long time for blind decoding, disadvantageously, there may be insufficient time to transmit ACK/NACK after receiving DL data through a PDSCH in one slot (or subframe), or the number of symbols available for the PDSCH may not be enough. To solve this problem, as proposed in the present specification, a DCI including a UL grant or a DL grant may be transmitted in a search space of an earlier symbol. Then, the UE may acquire the DCI by decoding a corresponding search space with an earlier order and immediately decode DL data of the PDSCH, or may prepare UL data transmission. This process is capable of decreasing a size of a gap required between downlink and uplink in the self-contained structure shown in FIG. 9. Therefore, there is an advantage in enabling a lower latency operation.

Meanwhile, the concept proposed in the present specification may be extended such that a symbol index for a location of a search space in which a DCI for initial transmission may differ from a symbol index for a location of a search space in which a DCI for retransmission is transmitted. A UE which requires a minimum latency may have to receive initial transmission data and retransmission data on consecutive symbols (or subframes). Assume that the UE has completed from DL reception to corresponding ACK/NACK transmission within one slot (or subframe) by using the self-contained structure shown in FIG. 9. In this case, a specific time is required when the BS determines ACK/NACK received from the UE and thereafter performs retransmission on the UE. In order to reduce the time, it may be effective that the search space in which the DCI for initial transmission is transmitted and the search space in which the DCI for retransmission is included are located at different locations. In addition, an ACK/NACK transmission timing for initially transmitted DL data and an ACK/NACK transmission timing for retransmitted DL data may be different from each other. More specifically, for example, the search space in which the DCI for initial transmission may be located at an earlier symbol index, and the search space in which the DCI for retransmission is transmitted may be located at a later symbol index.

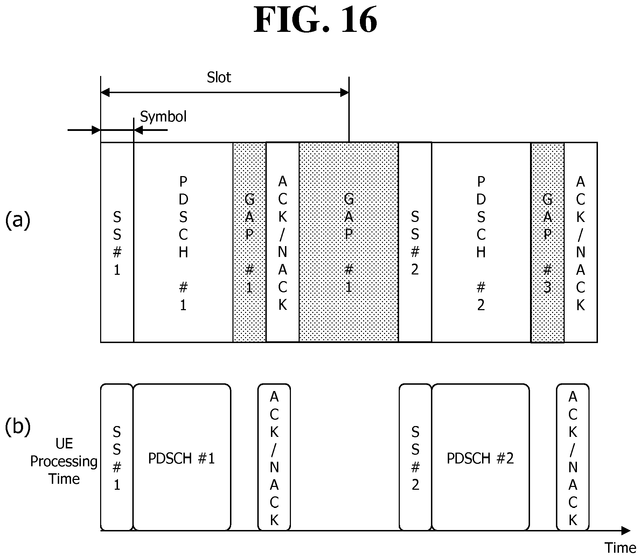

FIG. 16 shows an example in which a symbol index for a location of a search space in which a DCI for initial transmission is transmitted is different from a symbol index for a location of a search space in which a DCI for retransmission is transmitted.

FIG. 16 shows an example in which the above description is applied to a self-contained subframe structure. In the example shown in FIG. 16, a search space in which a PDCCH is transmitted may be located in two symbols. A search space (e.g., SS#1) in which a DCI (i.e., a DL grant) for initial transmission may be located in a $1^{st}$ symbol, and a high decoding order may be assigned thereto. Accordingly, the UE may minimize a time required for blind decoding, and may immediately demodulate a PDSCH#1. The reduced time for performing blind decoding may be used to secure a time gap duration (e.g., GAP#1) before ACK/NACK is transmitted. If the UE transmits a NACK signal to the BS, the BS may require a time until the NACK is received and retransmission is performed by confirming the NACK. In order to secure a sufficient time, it is shown in the example of FIG. 16 that a search space (e.g., SS#1) in which a DCI (including a DL grant) for retransmission is transmitted is located in a $2^{nd}$ symbol. Accordingly, the UE may decode a PDSCH after acquiring DCI through blind decoding of the $2^{nd}$ symbol.

On the other hand, a decoding order may be determined by a size of an available gap. For example, if a size of a required PDSCH is greater than a size of one slot (or subframe), upon transmitting the PDSCH across multiple slots (or subframes) and ensuring a sufficient gap region, a symbol index may be determined such that a required search space has a low decoding order. On the contrary, if a PDSCH region is very small and thus a time required for demodulation of the PDSCH is short or if a sufficient gap region can be secured, it may not be necessary to assign an earlier decoding order to a corresponding search space for a self-contained structure and latency minimization.

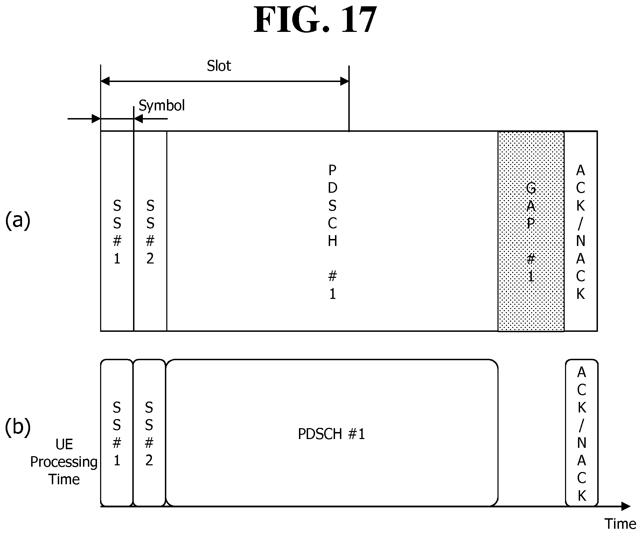

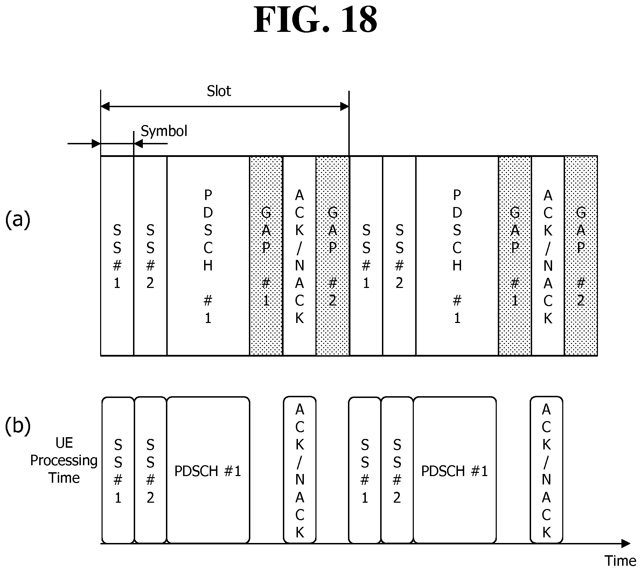

FIG. 17 and FIG. 18 show an example of determining a decoding order according to a gap size.

In the example shown in FIG. 17 and FIG. 18, a DCI for a PDSCH is located in a second search space (SS#2), and a decoding order of the SS#2 is determined to be second.

The aforementioned embodiments of the present invention can be implemented through various means. For example, the embodiments of the present invention can be implemented in hardware, firmware, software, combination of them, etc. Details thereof will be described with reference to the drawing.

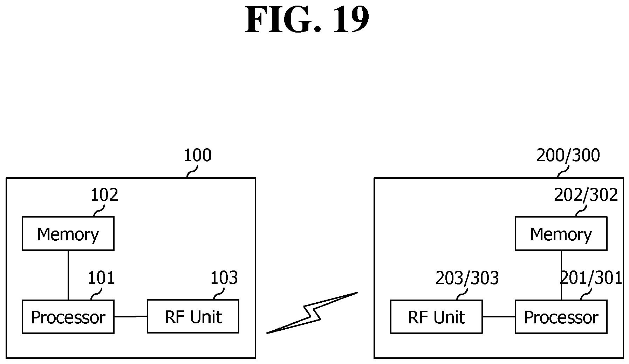

FIG. 19 is a block diagram of a wireless communication system according to an embodiment of the present invention.

BSs 200 and 300 include processors 201 and 301, memories 202 and 302, and radio frequency (RF) units 203 and 303. The memories 202 and 302 coupled with the processors 201 and 301 store a variety of information for driving the processors 201 and 301. The RF units 203 and 303 coupled to the processors 201 and 301 transmit and/or receive radio signals. The processors 201 and 301 implement the proposed functions, procedures, and/or methods. In the aforementioned embodiment, an operation of the BS may be implemented by the processors 201 and 301.

A UE 100 includes a processor 101, a memory 102, and an RF unit 103. The memory 102 coupled to the processor 101 stores a variety of information for driving the processor 101. The RF unit 103 coupled to the processor 101 transmits and/or receives a radio signal. The processor 101 implements the proposed functions, procedure, and/or methods.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The RF unit may include a baseband circuit for processing a radio signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Although the aforementioned exemplary system has been described on the basis of a flowchart in which steps or blocks are listed in sequence, the steps of the present invention are not limited to a certain order. Therefore, a certain step may be performed in a different step or in a different order or concurrently with respect to that described above. Further, it will be understood by those ordinary skilled in the art that the steps of the flowcharts are not exclusive. Rather, another step may be included therein or one or more steps may be deleted within the scope of the present invention.

**Claims**

1. A method of receiving a control channel in a search space, the method comprising:

   determining an order of blind decoding among multiple search spaces; and
   performing the blind decoding in the multiple search spaces based on the determined order,
   wherein the order among the multiple search spaces is determined based on delay sensitivity.

2. The method of claim 1, wherein the delay sensitivity is for downlink data or uplink data scheduled by the control channel in the search space.

3. The method of claim 1, wherein if only a short latency is allowed due to high delay sensitivity regarding downlink data or uplink data scheduled by a control channel within a random search space, the order is determined to preferentially perform blind decoding on the random search space.

4. The method of claim 1, where if downlink data or uplink data scheduled by a control channel within a random search space is voice or video call data for which only a low latency is allowed due to high delay sensitivity, the order is determined to preferentially perform blind decoding on the random search space.

5. The method of claim 1, where if only a low latency is allowed for an ACK/NACK signal for downlink data scheduled by a control channel within a random search space due to high delay sensitivity, the order is determined to preferentially perform blind decoding on the random search space.

6. The method of claim 1, wherein the multiple search spaces are divided by locations on a time axis and a frequency axis.

7. The method of claim 1, wherein the order is determined according to a configuration achieved in advance by a base station.

8. The method of claim 1, wherein a search space having an earlier order of blind decoding is located at an earlier symbol location within a subframe or slot.

9. The method of claim 1, wherein if delay sensitivity is high such that only a low latency is allowed for DL data or UL data scheduled by a control channel within a random search space, the random search space is located at an earlier symbol location within a subframe or slot.

10. A terminal for receiving a control channel within a search space, the terminal comprising:

   a transceiver; and
   a processor for controlling the transceiver, wherein the processor is configured to:

      determine an order of blind decoding among multiple search spaces; and
      perform the blind decoding in the multiple search spaces based on the determined order,
      wherein the order among the multiple search spaces is determined based on delay sensitivity.

11. The terminal of claim 10, wherein the delay sensitivity is for downlink data or uplink data scheduled by the control channel in the search space.

12. The terminal of claim 10, where if downlink data or uplink data scheduled by a control channel within a random search space is voice or video call data for which only a low latency is allowed due to high delay sensitivity, the order is determined to preferentially perform blind decoding on the random search space.

13. The terminal of claim 10, wherein the multiple search spaces are divided by locations on a time axis and a frequency axis.

14. The terminal of claim 10, wherein the order is determined according to a configuration achieved in advance by a base station.

15. The terminal of claim 10, wherein a search space having an earlier order of blind decoding is located at an earlier symbol location within a subframe or slot.

# FIG. 1

# FIG. 2

# FIG. 3

FIG. 4

# FIG. 5

Common search space

UE-specifice search space

L=4    4 CCEs    4 CCEs    4 CCEs    4 CCEs

L=8    8 CCEs    8 CCEs

EP 3 509 234 A1

# FIG. 6

| First Search Space | | Second Search Space | | Third Search Space |
|---|---|---|---|---|

offset

offset

Frequency

# FIG. 7

# FIG. 8

# FIG. 9

: DL only or UL only

Frequency

RB index

Symbol index

One TTI

: DL Control Channel    : UL Control Channel

# FIG. 10a

Time

First Search Space | Second Search Space

Frequency

# FIG. 10b

Time

Second Search Space

First Search Space

Frequency

# FIG. 10c

Time

First Search Space

Second Search Space

Frequency

# FIG. 10d

Time

Second Search Space

First Search Space

Frequency

# FIG. 11

Frequency

Control Region

First SS

Second SS

PDSCH

Subframe

DL grant for PDSCH exists in second SS

Decoding First SS | Decoding Second SS | Decoding PDSCH

DL grant for PDSCH exists in first SS

Decoding First SS | Decoding PDSCH

# FIG. 12

| Downlink | | | | | | |
|---|---|---|---|---|---|---|
| SS 1 | PDSCH 1 | | | | | |
| SS 2 | PDSCH 2 | | | | | |

| Uplink | | | | | |
|---|---|---|---|---|---|
| | | ACK/NACK Transmission | | ACK/NACK Transmission | |

DL grant for PDSCH exists in first SS

| Decoding First SS | Decoding PDSCH |

DL grant for PDSCH exists in second SS

| Decoding First SS | Decoding Second SS | Decoding PDSCH |

# FIG. 13

|  | SS1 |  |  |  |  |
|---|---|---|---|---|---|
| Downlink | SS2 |  |  |  |  |

| Uplink |  |  | PUSCH 1 Trans mission |  | PUSCH 2 Trans mission |

UL grant exists in first SS — Decoding First SS | Decoding First PUSCH

UL grant exists in second SS — Decoding First SS | Decoding Second SS | Decoding Second PUSCH

# FIG. 14

(a)

(b)

# FIG. 15

(a)

(b)

# FIG. 16

# FIG. 17

(a)

(b)

# FIG. 18

# FIG. 19

100

102

Memory

101      103

Processor      RF Unit

200/300

202/302

Memory

203/303      201/301

RF Unit      Processor

## INTERNATIONAL SEARCH REPORT

| | International application No. |
|---|---|
| | PCT/KR2017/009591 |

**A. CLASSIFICATION OF SUBJECT MATTER**

*H04L 1/00(2006.01)i, H04L 1/18(2006.01)i, H04W 72/12(2009.01)i*

According to International Patent Classification (IPC) or to both national classification and IPC

**B. FIELDS SEARCHED**

Minimum documentation searched (classification system followed by classification symbols)
H04L 1/00; H04W 24/00; H04L 1/02; H04B 7/02; H04L 27/28; H04W 72/04; H04W 4/00; H04L 27/26; H04L 1/18; H04W 72/12

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: blind decoding, search space, decoding order, delay sensitivity

**C. DOCUMENTS CONSIDERED TO BE RELEVANT**

| Category* | Citation of document, with indication, where appropriate, of the relevant passages | Relevant to claim No. |
|---|---|---|
| Y | KR 10-2014-0037189 A (LG ELECTRONICS INC.) 26 March 2014<br>See paragraphs [0075], [0077]-[0078], [0080]-[0082] and figures 4, 10. | 1-15 |
| Y | US 2009-0080557 A1 (WILHELMSSON, Leif et al.) 26 March 2009<br>See paragraphs [0032], [0034], [0038] and figures 3-4. | 1-15 |
| A | US 2013-0022014 A1 (HONG, Sungkwon et al.) 24 January 2013<br>See paragraphs [0085]-[0170] and figures 2-3. | 1-15 |
| A | US 2009-0088148 A1 (CHUNG, Jae Hoon et al.) 02 April 2009<br>See paragraphs [0107]-[0118] and figure 21. | 1-15 |
| A | US 2015-0264665 A1 (SIERRA WIRELESS, INC.) 17 September 2015<br>See paragraphs [0038]-[0068] and figures 1-2. | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 DECEMBER 2017 (07.12.2017) | **08 DECEMBER 2017 (08.12.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/009591**

| Patent document cited in search report | Publication date | Patent family member | Publication date |
|---|---|---|---|
| KR 10-2014-0037189 A | 26/03/2014 | CN 103650447 A | 19/03/2014 |
| | | CN 103650447 B | 08/03/2017 |
| | | EP 2732593 A2 | 21/05/2014 |
| | | US 2014-0133427 A1 | 15/05/2014 |
| | | US 9312997 B2 | 12/04/2016 |
| | | WO 2013-009089 A2 | 17/01/2013 |
| | | WO 2013-009089 A3 | 04/04/2013 |
| US 2009-0080557 A1 | 26/03/2009 | EP 2191603 A1 | 02/06/2010 |
| | | EP 2191603 B1 | 27/07/2016 |
| | | US 7929625 B2 | 19/04/2011 |
| | | WO 2009-037110 A1 | 26/03/2009 |
| US 2013-0022014 A1 | 24/01/2013 | KR 10-2011-0110975 A | 10/10/2011 |
| | | KR 10-2011-0111207 A | 10/10/2011 |
| | | WO 2011-122893 A2 | 06/10/2011 |
| | | WO 2011-122893 A3 | 26/01/2012 |
| US 2009-0088148 A1 | 02/04/2009 | CN 101809897 A | 18/08/2010 |
| | | CN 101809897 B | 31/07/2013 |
| | | CN 101809898 A | 18/08/2010 |
| | | CN 101809898 B | 08/01/2014 |
| | | CN 103414533 A | 27/11/2013 |
| | | CN 103414533 B | 10/08/2016 |
| | | EP 2193615 A2 | 09/06/2010 |
| | | EP 2193615 B1 | 19/09/2012 |
| | | EP 2193616 A1 | 09/06/2010 |
| | | EP 2193616 B1 | 23/07/2014 |
| | | JP 05048839 B2 | 17/10/2012 |
| | | JP 05048841 B2 | 17/10/2012 |
| | | JP 2010-539847 A | 16/12/2010 |
| | | JP 2010-541367 A | 24/12/2010 |
| | | KR 10-1448309 B1 | 08/10/2014 |
| | | KR 10-1498734 B1 | 12/03/2015 |
| | | KR 10-2009-0033001 A | 01/04/2009 |
| | | US 2011-0083066 A1 | 07/04/2011 |
| | | US 2014-0204887 A1 | 24/07/2014 |
| | | US 2014-0204888 A1 | 24/07/2014 |
| | | US 8401542 B2 | 19/03/2013 |
| | | US 8739013 B2 | 27/05/2014 |
| | | US 9485052 B2 | 01/11/2016 |
| | | US 9560600 B2 | 31/01/2017 |
| | | WO 2009-041779 A1 | 02/04/2009 |
| | | WO 2009-041785 A2 | 02/04/2009 |
| | | WO 2009-041785 A3 | 22/05/2009 |
| US 2015-0264665 A1 | 17/09/2015 | EP 3120644 A1 | 25/01/2017 |
| | | US 9681256 B2 | 13/06/2017 |
| | | WO 2015-139127 A1 | 24/09/2015 |

Form PCT/ISA/210 (patent family annex) (January 2015)